# EUROPÄISCHE PATENTANMELDUNG

(11) **EP 1 544 498 A1**
(43) Veröffentlichungstag der Anmeldung: **22.06.2005**
(21) Anmeldenummer: 04027715.4
(22) Anmeldetag: 23.11.2004
(51) Int. Cl.: F16F 9/512

(54) **Dämpfungsvorrichtung für ein Kraftfahrzeug**

(30) Priorität: 20.12.2003 DE 10360140
(71) Anmelder: DaimlerChrysler AG, 70567 Stuttgart (DE)
(72) Erfinder: Wilhelm, Ralf, 75394 Oberreichenbach (DE)

(57) **Zusammenfassung**

2.1. Dämpfungsvorrichtung für ein Kraftfahrzeug, die zwischen einem Rad und einem Fahrzeugaufbau auftretende Relativbewegungen dämpft. Die Dämpfungsvorrichtung weist ein erstes Dämpfungselement auf, das ein mit Arbeitsmedium gefülltes Dämpfergehäuse (1), in dem ein Kolben (3) angeordnet ist, der das Volumen des Dämpfergehäuses (1) in zwei Arbeitsräume (7,8) unterteilt, auf. Eine Kolbenstange (2) ist mit dem Kolben (3) verbunden. Darüber hinaus weist die Dämpfungsvorrichtung ein dem ersten Dämpferelement parallel angeordnetes zweites Dämpferelement (24) auf.
2.2. Erfindungsgemäß ist bei der Dämpfungsvorrichtung das zweite Dämpferelement (24) in der Kolbenstange (2) angeordnet ist und jeweils über in der Kolbenstange (2) verlaufenden Bypassbohrungen (15,16) mit den beiden Arbeitsräumen (7,8) verbunden.
2.3. Anwendung in Kraftfahrzeugen, insbesondere Personenkraftwagen.

## Beschreibung

Die Erfindung betrifft eine Dämpfungsvorrichtung für ein Kraftfahrzeug nach dem Oberbegriff des Anspruchs 1.

Aus der Patentschrift EP 1 152 166 A1 ist eine Dämpfungsvorrichtung bekannt, die eine amplitudenabhängige Dämpfung ermöglicht. Ein erstes Dämpferelement weist einen in einem Dämpfergehäuse angeordneten Kolben auf. Ein zweites Dämpferelement ist zur Beeinflussung kleiner Amplituden in der Dämpfungsvorrichtung angeordnet. Dazu ist ein durch eine Membran oder eine verschiebliche feste Scheibe geteilter Zusatzraum vorgeschlagen, der hydraulisch parallel zum ersten Dämpferelement geschaltet ist. Der Kolben teilt das Dämpfergehäuse in zwei Arbeitsräume, die jeweils mit einer Seite des Zusatzraums des zweiten Dämpferelementes in Verbindung stehen. Der durch die Membran oder die feste Scheibe geteilte Zusatzraum wirkt als Ausgleichsraum bei geringen Stoßdämpferbewegungen. Damit ist die Gesamtdämpfung für Schwingungen mit kleiner Amplitude gering. Die Dämpfung des ersten Dämpferelementes setzt erst bei größeren Bewegungen des Kolbens, d.h. nachdem die Dämpferwirkung des zweiten Dämpferelementes erschöpft ist, ein. Das zweite Dämpferelement ist entweder zwischen Kolbenstange und Arbeitskolben oder auf der der Kolbenstange abgewandten Seite des Arbeitskolbens angeordnet. Dabei ist jeweils der mögliche Hubweg des Kobens um die Bauhöhe des zweiten Dämpferelementes reduziert.

Aufgabe der Erfindung ist es demgegenüber, eine Dämpfungsvorrichtung mit einer amplitudenabhängigen Dämpfung bereitzustellen, die weniger Reduzierung des Hubweges des Kolbens erfordert.

Diese Aufgabe wird durch eine Dämpfungsvorrichtung mit den Merkmalen des Anspruchs 1 gelöst.

Die erfindungsgemäße Dämpfungsvorrichtung zeichnet sich durch ein zweites Dämpferelement aus, das in einer Kolbenstange angeordnet ist und jeweils über in der Kolbenstange verlaufenden Bypassbohrungen mit den beiden Arbeitsräumen verbunden ist. In der Kolbenstange ist eine Längsbohrung vorgesehen, die in vorteilhafter Weise ohne die Erfordernis von zusätzlichem Bauraum die Anordnung des zweiten Dämpferelementes ermöglicht. Die hydraulische Verbindung des zweiten Dämpferelementes mit den Arbeitsräumen des ersten Dämpferelementes ist in einfacher Weise über in der Kolbenstange verlaufende Längs- und Querbohrungen darstellbar.

In Ausgestaltung der Erfindung ist die Kolbenstange aus einem ersten Kolbenstangenabschnitt und einem zweiten Kolbenstangenabschnitt aufgebaut. Die Aufteilung in zwei Kolbenstangenabschnitte ermöglicht in einfacher Weise in der Kolbenstange angeordneten Bauraum für das zweite Dämpferelement bereitzustellen.

In weiterer Ausgestaltung der Erfindung weist der zweite Kolbenstangenabschnitt eine Sacklochbohrung auf, in der das zweite Dämpferelement angeordnet ist. Damit ist der für die Montage des Arbeitskolbens maßgebliche Außendurchmesser des ersten Kolbenstangenabschnittes unabhängig von der das zweite Dämpfungselement aufnehmenden Längsbohrung in dem zweiten Kolbenstangenabschnitt wählbar. Dadurch sind in der Dämpfungsvorrichtung in vorteilhafte Weise Arbeitskolben aus Seriendämpfern ohne Anpassung einsetzbar.

In weiterer Ausgestaltung der Erfindung ist der erste Kolbenstangenabschnitt und der zweite Kolbenstangenabschnitt über eine Presspassung vormontierbar. Die sehr genau gefertigte Presspassung ermöglicht eine optimale Mittenzentrierung des ersten Kolbenstangenabschnitts zum zweiten Kolbenstangenabschnitt. Eine Presspassung ist günstig für eine automatische Fertigung.

In weiterer Ausgestaltung der Erfindung sind der erste Kolbenstangenabschnitt und der zweite Kolbenstangenabschnitt miteinander verschweißt. Die Verschweißung der beiden Kolbenstangenabschnitte ermöglicht eine kostengünstige, hochfeste Verbindung.

In weiterer Ausgestaltung der Erfindung weist das zweite Dämpferelement einen Schieber auf. Der Schieber ist in der Längsbohrung des zweiten Kolbenstangeabschnitts angeordnet. Der Schieber teilt die Längsbohrung über einen Führungsdurchmesser in zwei Kammern, die jeweils mit den Arbeitsräumen des ersten Dämpferelements verbunden sind. Der vorgeschlagene Schieber ist einfach und kostengünstig als Dreh- oder Spritzgussteil aus einem metallischen Werkstoff oder Kunststoff herstellbar.

In weiterer Ausgestaltung der Erfindung sind an dem Schieber Dichtflächen angeordnet, über die die Bypassbohrungen verschließbar sind. Die Stirnseiten des Schiebers sind als Dichtflächen ausgebildet. Steht der Schieber an einem Ende der Längsbohrung an, so verschließt dieser über die Dichtfläche eine Bypassbohrung. Damit ist ein Abfließen des über den Führungsdurchmesser des Kolbens strömenden Arbeitsmediums unterbunden. Sobald die Bypassbohrung verschlossen ist, erfolgt die Dämpfung ausschließlich über das erste Dämpferelement. Damit ist in vorteilhafter Weise eine Vorrichtung mit zweistufiger Dämpfung darstellbar.

In weiterer Ausgestaltung der Erfindung sind die Dichtflächen am Schieber zur Zentrierung in den Bypassbohrungen kegelförmig ausgeführt. Die Zentrierung des Schiebers in der Bypassbohrung vermeidet ein durch Schiefstellung verursachtes Klemmen in der Längsbohrung.

In weiterer Ausgestaltung der Erfindung sind an den Dichtflächen am Schieber Schichten aus Elastomerwerkstoff zur besseren Abdichtung zugeordnet. Die Abdichtung der Bypassbohrungen über einen elastischen Dichtstoff aus Elastomer oder einen vergleichbaren elastischen Werkstoff reduziert wirkungsvoll eine Leckage des Arbeitsmediums bei verschlossener Bypassbohrung. Der Elastomerwerkstoff ist durch Kleben, Formschluss oder Anvulkanisieren an der Dichtfläche des Schiebers befestigbar.

In weiterer Ausgestaltung der Erfindung weist der Schieber zwei Steuerkanten auf, über die die Bypassbohrung verschließbar ist. Durch eine axiale Bewegungen des Schiebers, schieben sich die Steuerkanten über die Bypassbohrung des zweiten Kolbenstangenabschnitts, wodurch der Durchfluss des Arbeitsmediums reduziert bzw. gestoppt ist. Ein Schieber mit Steuerkanten ist kostengünstig als Drehteil herstellbar.

In weiterer Ausgestaltung der Erfindung weist der Schieber einen ersten und zweiten Führungsdurchmesser auf.
Durch die Anordnung von zwei Führungsdurchmessern sind in einfacher Weise zwei Steuerkanten darstellbar, die die Bypassbohrung in dem zweiten Kolbenstangenabschnitt sowohl bei einer großen Ein- und Ausfederamplitude verschließen.

In weiterer Ausgestaltung der Erfindung sind in einem Zylinderring des zweiten Führungsdurchmessers mit Arbeitsmedium durchströmbare Bohrungen vorgesehen. Durch die Bohrungen strömt bei kleinen Amplituden verdrängtes Arbeitsmedium. Durch die Bohrungen ist ein Zufluss und ein Abfluss über die Bypassbohrung in dem zweiten Kolbenstangenabschnitt in der Mitte des Schiebers ermöglicht. Damit ist ein kleiner Abstand zwischen der Bypassbohrung und einem Kolbens des ersten Dämpferelementes gewährleistet, wodurch die Reduzierung des Dämpferwegs der Dämpfungsvorrichtung durch Anordnung des zweiten Dämpferelements gering ist.

In weiterer Ausgestaltung der Erfindung ist der Schieber beidseitig über Federn eingespannt. Die Federn halten den Schieber in Ruhestellung in Neutrallage. Die Federn sind vorzugsweise als Schrauben- oder Tellerfedern ausführbar.
Die Federhärte ist so auszuwählen, dass der Schieber bei kurzen Stößen und kleinen Amplituden des Arbeitskolbens die Bypassbohrungen offen hält und bei großen Amplituden die Bypassbohrungen verschließt.
Über die Federhärte ist der Dämpfungsgrad in Abhängigkeit der Amplitude einstellbar. Die Verwendung von Federn mit unterschiedlicher Federhärte lässt ein unterschiedliches Verhalten bei einer Zug- oder Druckbeanspruchung des Dämpferelementes zu.

In weiterer Ausgestaltung der Erfindung weisen die Federn eine progressive Kennlinie auf. Beispielsweise weisen Schraubenfedern mit unterschiedlicher Drahtsteigung ein progressive Kennlinie auf, d.h. eine Federsteifigkeit nimmt beim Zusammendrücken der Feder zu. Durch den Einsatz von Federn mit progressiven Kennlinien ist der Übergang von einer weichen auf eine härtere Dämpfungsstufe und umgekehrt beeinflussbar.

In weiterer Ausgestaltung der Erfindung weisen die Federn eine temperaturabhängige Kennlinie auf. Damit ist in vorteilhafter Weise der Übergang von einer weichen auf eine harte Dämpfungsstufe und umgekehrt auch temperaturabhängig beeinflussbar. Die Federn sind dazu aus einem Bimetall oder aus einem Werkstoff mit Formgedächtnis herzustellen. Gleichfalls ist aus einer Kombination von Federn, d.h. Hintereinanderund/oder Parallelschaltung aus Federn mit temperaturabhängiger und nicht temperaturabhängiger Kennlinie, ein gewünschtes Schaltverhalten darstellbar.

Weitere Merkmale und Merkmalskombinationen ergeben sich aus der Beschreibung sowie der Zeichnung. Konkrete Ausführungsbeispiele der Erfindung sind in den Zeichnungen vereinfacht dargestellt und in der nachfolgenden Beschreibung näher erläutert. Es zeigen
- Fig.1: eine Darstellung einer erfindungsgemäßen Dämpfungsvorrichtung und
- Fig.2: eine weitere Ausführungsform der erfindungsgemäßen Dämpfungsvorrichtung.

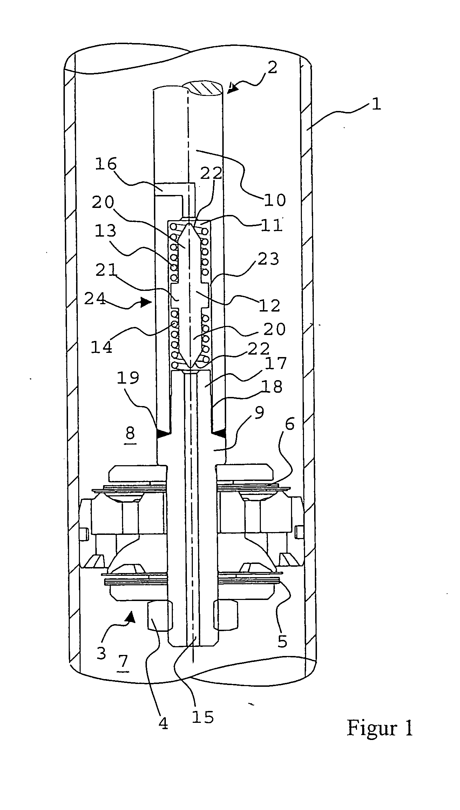

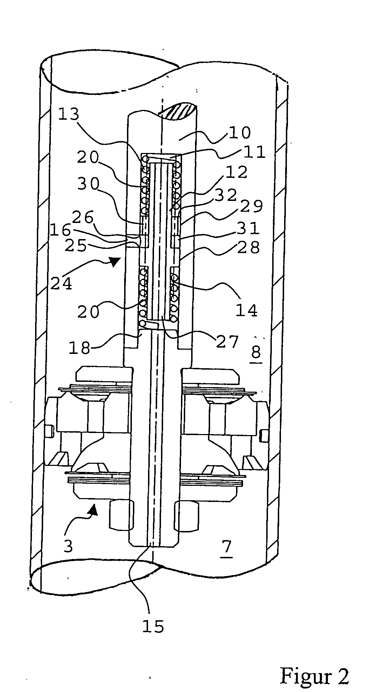

Gleiche Bauteile in Fig.1 und Fig.2 sind im folgenden mit den gleichen Bezugszeichen bezeichnet.

In der Figur 1 sind die wesentlichen Bauteile einer erfindungsgemäßen Dämpfungsvorrichtung dargestellt. In der Darstellung ist beispielhaft ein Einrohrdämpfer, der zwischen Aufbau und einer ein Rad lagernden Radführungsvorrichtung anordenbar ist, gezeigt. In gleicher Weise ist jedoch auch ein Zweirohrdämpfer einsetzbar. Zur Befestigung der Dämpfungsvorrichtung sind jeweils an einem Dämpfergehäuse 1 und an einer Kolbenstange 2 nicht gezeigte Anschraubaugen vorgesehen. Durch eine Ein- oder Ausfederbewegung des Rades verschiebt sich die Kolbenstange 2 relativ zum Dämpfergehäuse 1.

Im Dämpfergehäuse 1 ist ein Kolben 3, der mit der Kolbenstange 2 verbunden ist, angeordnet. Der Kolben 3 teilt das mit einem Arbeitsmedium gefüllte innere Volumen des Dämpfergehäuses 1 in einen ersten Arbeitsraum 7 und einen zweiten Arbeitsraum 8.

An dem Kolben 3 sind zwei flach bauende Plattenventile 5,6 angeordnet. Die Form der Dämpfungskennlinie ist von den an dem Kolben 3 sitzenden Plattenventilen 5,6 und von im Kolben 3 angeordneten Überströmkanälen bestimmt. Fährt beispielsweise die Kolbenstange 2 aus dem Dämpfergehäuse 1 aus, so strömt das Arbeitsmedium, das bevorzugt ein Hydrauliköl ist, über Bohrungen in dem Kolben 3 und das Plattenventil 5 aus dem zweiten Arbeitsraum 8 in den ersten Arbeitsraum 7. Beim Einfahren des Kolbens 3 in das Dämpfergehäuse 1 strömt das Hydrauliköl in umgekehrter Richtung und ist über das Plattenventil 6 bedämpft. Durch unterschiedliche Auslegung der Plattenventile 5,6 lassen sich somit beim Ein- und Ausfahren der Kolbenstange 2 unterschiedliche Dämpferkennlinien einstellen.

Auf der Kolbenstange 2 ist ein Gewinde vorgesehen, auf das zur Befestigung des Kolbens 3 und der Plattenventile 5,6 eine Mutter 4 aufgeschraubt ist.

Die Kolbenstange 2 ist zweiteilig aufgebaut, d.h. aus einem ersten Kolbenstangenabschnitt 9 und einem zweiten Kolbenstangenabschnitt 10. Der zweite Kolbenstangenabschnitt 10 weist eine Sacklochbohrung 11, in der ein zweites Dämpferelement 24 angeordnet ist, auf. Das zweite Dämpferelement 24 umfasst einen Schieber 12 und Federn 13,14. Über die Federn 13,14 ist der Schieber 12 beidseitig eingespannt und damit in einer Neutrallage positioniert. In dem ersten Kolbenstangenabschnitt 9 ist eine Bypassbohrung 15 als Längsbohrung und in dem zweiten Kolbenstangenabschnitt 10 ist eine Bypassbohrung 16 als Kombination aus Längs- und Querbohrung eingebracht. Die zwei Kolbenstangenabschnitte 9,10 sind über einen Press- und Schweißvorgang gefügt, so dass der Schieber 12 und die Federn 13,14 in der Sacklochbohrung 11 eingeschlossen sind und diese über die Bypassbohrungen 15,16 mit dem ersten und zweiten Arbeitsraum 7,8 in Verbindung stehen.

In vorteilhafter Weise ist die Sacklochbohrung 11 in dem zweiten Kolbenstangenabschnitt 10 so tief gebohrt, dass zur Montage ein Zapfen 17 des ersten Kolbenstangenabschnitts 9 in die Sacklochbohrung 11 einsteckbar ist, ohne von den Federn 13,14 wieder ausgeschoben zu werden. Damit sind die Federn 13,14 und der Schieber 12 in der Sacklochbohrung 11 gefangen und anschließende Montagevorgänge sind vereinfacht. Über eine Presspassung 18 sind der erste und zweite Kolbenstangenabschnitt 9,10 exakt zueinander positioniert. Über einen nachfolgend angebrachte Schweißnaht 19 ist eine feste Verbindung der Kolbenstangenabschnitt 9, 10 hergestellt.

Der Schieber 12 weist zwei Durchmesser 20 auf, auf denen die Federn 13,14 geführt sind. Ein Durchmesser 21 führt den Schieber 12 in der Sacklochbohrung 11. Zwischen dem Sacklochbohrungsdurchmesser und dem Schieberführungsdurchmesser 21 ist Spiel vorgesehen, so dass ein Ringspalt 23 entsteht über den ein definierter Hydraulikölstrom fließen kann. Dieser Ringspalt ist größer, als die Bohrungen 15 und 16 gewählt, damit die Abstimmung über die Querbohrung im Kanal 16 erfolgen kann.

In einer modifizierten Ausführungsform ist der Schieberführungsdurchmesser 21 in der Sacklochbohrung 11 mit sehr wenig Spiel geführt. Um einen Hydraulikstrom über den Schieberführungsdurchmesser 21 sicher zu stellen, sind an diesem Längsnuten und/oder Abflachungen am Durchmesser vorgesehen.

Stirnseitig sind an dem Schieber 12 kegelförmige Dichtflächen 22 angeordnet. Bei ausreichender Auslenkung des Schiebers 12 aus der Neutrallage verschließen diese Dichtflächen 22 die Bypassbohrungen 15,16. Durch kegelige Dichtflächen 22 ist eine zusätzliche Zentrierung in den Bypassbohrungen 15,16 erreicht.

In einer modifizierten Ausführungsform sind aufgrund geringerer Kosten auch plane Dichtflächen 22 einsetzbar. Um ein Klemmen des Schiebers 12 zu vermieden ist dabei auf eine ausreichende Führung über den Schierberführungsdurchmesser 21 und die Federn 13,14 zu achten.

Bei kleinen Relativbewegungen des Kolbens 3 zu dem Dämpfergehäuse 1, sprich bei kleinen Amplituden, fließt das Hydrauliköl von dem ersten in den zweiten Arbeitsraum 7,8 und umgekehrt über die Bypassbohrungen 15,16, die Sacklochbohrung 11 und den Ringspalt 23. Damit ist eine kleine Dämpfung erreichbar, die über die Bypassbohrungen 15,16 und über den Ringspaltquerschnitt 23 abstimmbar ist.
Mit zunehmenden Amplituden ist der Schieber 12 aufgrund des Druckunterschiedes vor und nach dem Ringspalt 23 ausgelenkt. Bei ausreichender großen Amplituden und Radeinfedergeschwindigkeiten, führt der Druckunterschied zu einem einseitigen Anliegen des Schiebers 12, wodurch eine der Bypassbohrungen 15,16 verschlossen ist. Damit ist eine Strömung des Hydrauliköls über die Bypassbohrungen 15,16 unterbunden und das Hydrauliköl strömt über die Plattenventile 5,6 des Kolbens 3. Die Dämpfung ist nun ausschließlich von den Plattenventilen 5,6 bestimmt und vorzugsweise deutlich größer. Somit ist mit der Dämpfungsvorrichtung eine zweistufige Dämpferkennlinie darstellbar. Über die Steifigkeiten der Federn 13,14, Variation von Schieberweg und Veränderung von Strömungsquerschnitten ist die Lage des Umschaltpunktes von einer weichen auf eine härtere Dämpfercharakteristik und das Verhalten im Übergangsbereich in Abhängigkeit der Amplituden und Kolbengeschwindigkeit einstellbar.

In Fig. 2 ist eine weitere Ausführungsform der erfindungsgemäßen Dämpfungsvorrichtung dargestellt. Der Schieber ist zwischen den Federn 13,14 eingespannt, die auf einem Federführungsdurchmesser 20 geführt und jeweils an dem ersten und zweiten Führungsdurchmesser 28,29 abgestützt sind. Zwischen dem ersten und zweiten Führungsdurchmesser 28,29 ist eine umlaufendende Nut 31 angeordnet. Die an den Führungsdurchmessern 28,29 links und rechts der Nut 31 entstehende Kanten sind als Steuerkanten 25,26 vorgesehen. In dem aus dem Federführungsdurchmesser 20 und dem zweiten Führungsdurchmesser 29 begrenzten Zylinderring sind mit Arbeitsmedium durchströmbare Bohrungen 30 angeordnet. Beispielsweise sind in dem Zylinderring 32 vier um 90° versetzte Bohrungen 30 angeordnet. Die Führungsdurchmesser 28,29 sind vorzugsweise so gewählt, dass zu dem Durchmesser der Sacklochbohrung 11 nur sehr wenig Spiel auftritt. Damit ist eine geringe Leckage von Arbeitsmedium über die Führungsdurchmesser 28,29 zu gewährleisten. Der Schieber 12 weist eine durchgehende Längsbohrung 27 auf.

Bei kleinen Relativbewegungen des Kolbens 3 zu dem Dämpfergehäuse 1, fließt das Hydrauliköl von dem ersten in den zweiten Arbeitsraum 7,8 und umgekehrt über die Bypassbohrung 15 in die Sacklochbohrung 11, über die Längsbohrung 27 zu den Bohrungen 30 und von dort über die Nut 31 zu der Bypassbohrung 16. Damit ist eine kleine Dämpfung erreichbar, die über die Bypassbohrungen 15,16 sowie die Bohrungen 30 abstimmbar sind.

Bei größeren Amplituden des Kolbens 3 ist der Schieber 12 aufgrund des Druckunterschiedes in den Arbeitsräumen 7,8 ausgelenkt. Der Schieber 12 bewegt sich axial in der Sacklochbohrung 11, so dass sich je nach Bewegungsrichtung des Kolbens 3 die Steuerkante 25 oder die Steuerkante 26 über die Bypassbohrung 16 schiebt. Sobald die Bypassbohrung 16 von einem Führungsdurchmesser 28,29 vollständig überdeckt ist, ist diese verschlossen. Das Verschließen über die Steuerkante erfolgt in vorteilhafter Weise nicht schlagartig, so dass ein weicher Übergang zwischen den Kennlinien dargestellt ist.

Die in Fig. 2 dargestellt Ausführung hat den Vorteil, dass der Bypasskanal nicht oberhalb der Sacklochbohrung 11 sondern schiebermittig in den zweiten Arbeitsraum mündet. Durch die gezeigte Anordnung des zweiten Dämpferelementes 24 ist der maximal mögliche Dämpferweg nur geringfügig vermindert. Einer Reduzierung des maximalen Dämpferweges wirkt zudem die kurze Presspassung 18 entgegen, da dadurch die Bypassbohrung 16 weiter in Richtung Kolben 3 wandert.

In einer modifizierten Ausführungsform ist durch verschiedene Steifigkeiten der Federn 13,14 beim Ein- und Ausfedern ein unterschiedliches Dämpferverhalten erzielbar. Durch Abstimmung der Federn 13,14, die an Vorder- und Hinterachse durchaus eine unterschiedliche Federcharakteristik aufweisen können, ist ein optimales Fahrverhalten erzielbar.

Über den Einsatz von Federn 13,14 mit progressiver oder degressiver Steigung sind weiter Abstimmungsmöglichkeiten gegeben.

## Patentansprüche

1. Dämpfungsvorrichtung für ein Kraftfahrzeug, die zwischen einem Rad und einem Fahrzeugaufbau auftretende Relativbewegungen dämpft, die ein
- erstes Dämpferelement aufweist mit einem mit Arbeitsmedium gefüllten Dämpfergehäuse (1), in dem ein Kolben (3) angeordnet ist, der das Volumen des Dämpfergehäuses (1) in zwei Arbeitsräume (7,8) unterteilt und der einer Kolbenstange (2) verbunden ist, und
- einem parallel angeordneten zweiten Dämpferelement (24),
**dadurch gekennzeichnet, dass**
das zweite Dämpferelement (24) in der Kolbenstange (2) angeordnet ist und jeweils über in der Kolbenstange (2) verlaufende Bypassbohrungen (15,16) mit den beiden Arbeitsräumen (7,8) verbunden ist.

2. Dämpfungsvorrichtung nach Anspruch 1 ,
**dadurch gekennzeichnet, dass**
die Kolbenstange (2) aus einem ersten Kolbenstangenabschnitt (9) und einem zweiten Kolbenstangenabschnitt (10) aufgebaut ist .

3. Dämpfungsvorrichtung nach Anspruch 2 ,
**dadurch gekennzeichnet, dass**
der zweite Kolbenstangenabschnitt (10) eine Sacklochbohrung (11) aufweist, in der das zweite Dämpferelement (24) angeordnet ist.

4. Dämpfungsvorrichtung nach einem der Ansprüche 2 oder 3 ,
**dadurch gekennzeichnet, dass**
der erste Kolbenstangenabschnitt (9) und der zweite Kolbenstangenabschnitt (10) über eine Presspassung (18) vormontierbar sind.

5. Dämpfungsvorrichtung nach einem der Ansprüche 2 bis 4 ,
**dadurch gekennzeichnet, dass**
der erste Kolbenstangenabschnitt (9) und der zweite Kolbenstangenabschnitt (10) miteinander verschweißt sind.

6. Dämpfungsvorrichtung nach einem der Ansprüche 1 bis 5 ,
**dadurch gekennzeichnet, dass**
das zweite Dämpferelement (24) einen Schieber (12) aufweist.

7. Dämpfungsvorrichtung nach Anspruch 6 ,
**dadurch gekennzeichnet, dass**
an dem Schieber (12) Dichtflächen (22) angeordneten sind, über die die Bypassbohrungen (15,16) verschließbar sind.

8. Dämpfungsvorrichtung nach einem der Ansprüche 6 oder 7 ,
**dadurch gekennzeichnet, dass**
Dichtflächen (22) am Schieber (12) zur Zentrierung in den Bypassbohrungen (15,16) kegelförmig ausgeführt sind.

9. Dämpfungsvorrichtung nach einem der Ansprüche 6 bis 8 ,
**dadurch gekennzeichnet, dass**
an den Dichtflächen (22) am Schieber (12) Schichten aus Elastomerwerkstoff zur besseren Abdichtung vorgesehen sind.

10. Dämpfungsvorrichtung nach Anspruch 6,
**dadurch gekennzeichnet, dass**
der Schieber (12) zwei Steuerkanten (25,26) aufweist, über die die Bypassbohrung (16) verschließbar ist.

11. Dämpfungsvorrichtung nach Anspruch 10,
**dadurch gekennzeichnet, dass**
der Schieber (12) einen ersten und zweiten Führungsdurchmesser (28,29) aufweist.

12. Dämpfungsvorrichtung nach Ansprüche 10 oder 11,
**dadurch gekennzeichnet, dass**
der Schieber (12) eine Längsbohrung (27) aufweist und in einem Zylinderring (32) des zweiten Führungsdurchmessers (29) mit Arbeitsmedium durchströmbare Bohrungen (30) vorgesehen sind.

13. Dämpfungsvorrichtung nach Anspruch 6 bis 12,
**dadurch gekennzeichnet, dass**
der Schieber (12) beidseitig über Federn (13,14) eingespannt ist.

14. Dämpfungsvorrichtung nach Anspruch 13,
**dadurch gekennzeichnet, dass**
die je einer Seite des Schiebers (12) zugeordneten Federn (13,14) unterschiedliche Kennlinien aufweisen.

15. Dämpfungsvorrichtung nach Anspruch 13 oder 14,
**dadurch gekennzeichnet, dass**
die Federn (13,14) eine progressive Kennlinie aufweisen.

16. Dämpfungsvorrichtung nach einem der Ansprüche 13 bis 15,
**dadurch gekennzeichnet, dass**
die Federn (13,14) eine temperaturabhängige Kennlinie aufweisen.
